# EUROPÄISCHE PATENTSCHRIFT

(11) **EP 0 602 513 B1**
(45) Veröffentlichungstag und Bekanntmachung des Hinweises auf die Patenterteilung: **30.07.1997**
(21) Anmeldenummer: 93119727.1
(22) Anmeldetag: 08.12.1993
(51) Int. Cl.: B01J 13/14, C09D 7/06

(54) **Pulverförmige Zubereitung enthaltend Mikrokapseln mit einem als Verlaufmittel geeigneten Kernmaterial**
Powder Composition containing microcapsules with a core useable as a levelling agent
Composition pulvéruant contenant microcapsules à noyau utilisable comme agent nivelant

(30) Priorität: 15.12.1992 DE 4242193
(43) Veröffentlichungstag der Anmeldung: 22.06.1994
(73) Patentinhaber: BASF Aktiengesellschaft, 67063 Ludwigshafen (DE)
(72) Erfinder: Schuler, Bernhard, Dr., D-6800 Mannheim 24 (DE); Bobar, Georg, D-6702 Bad Duerkheim (DE); Korth, Tilmann, Dr., D-6706 Wachenheim (DE); Flocken, Ottokar, D-6719 Carlsberg (DE); Gleich, Peter, Dr., D-7107 Flein (DE)

(56) Entgegenhaltungen:
- EP-A- 0 088 566
- EP-A- 0 379 892
- DE-A- 3 407 829
- FR-A- 2 265 834
- US-A- 4 120 841
- US-A- 4 171 407
- PATENT ABSTRACTS OF JAPAN vol. 15, no. 173 (C-0828)2. Mai 1991 & JP-A-03 039 382 (SAKURA COLOR) 20. Februar 1991

## Beschreibung

Für die Herstellung von Überzügen geeignete pulverförmige Zubereitungen, enthaltend ein pulverförmiges filmbildendes Polymer und Mikrokapseln aus einem polymeren Wandmaterial und einem polymeren Kernmaterial, welches als Verlaufmittel für die Filmbildung von filmbildenden Oligomeren und Polymeren geeignet ist,

Mikrokapseln aus polymeren Wandmaterialien und flüssigen, pastenförmigen oder festen Kernmaterialien wie Farbbildnern, Pigmentpasten, Duftstoffen oder physiologischen Wirkstoffen sind allgemein bekannt. Das gleiche gilt für ihre Herstellung.

Aus der EP-A 88 566 sind Mikrokapsel-Toner bekannt, welche aus Polyurethanen bzw. Polyharnstoffen als Wandmaterial und einem flüssigen oder festen Kern bestehen, wobei im Kern neben einem Farbstoff hochviskose Materialien wie beispielsweise Poly(meth)acrylate vorliegen.

Die DE-OS 34 07 829 bezieht sich auf druckfixierbare Toner in Mikrokapselform mit einem Kernmaterial, welches eine Mischung aus einer Substanz mit einer Glasübergangstemperatur (Tg) unter +5°C und einer Substanz mit einer Erweichungstemperatur von über 25°C darstellt.

In der EP-A 26 914 sind Mikrokapseln für den Einsatz in druckempfindlichen Auftragungssystemen beschrieben, deren Wandmaterial aus einem Melamin-Formaldehyd-Kondensationsprodukt besteht.

Ferner ist die Herstellung von Überzügen aus filmbildenden Polymeren nach dem sogenannten Pulverlack-Verfahren allgemein bekannt. Hierbei wird eine pulverförmige Lackzubereitung auf das Substrat aufgebracht, wonach die Filmbildung durch Erhitzen bewirkt wird.

Da diese Filmbildung aber häufig nicht schnell genug oder nicht in ausreichendem Maße verläuft, muß man meistens ein Verlaufmittel mitverwenden. Solche Verlaufmittel sind üblicherweise polymere, relativ niedrig viskose klebrige Substanzen. Aufgrund ihrer Klebrigkeit ist eine homogene Vermischung mit dem eigentlichen Überzugsmittel in der Regel nicht möglich.

Zur Unterdrückung der Klebrigkeit wurden Verlaufmittel bisher auf spezielle Kieselsäuren aufgebracht. So wird beispielsweise in "M.K. Youssouf, 'Modern Paint and Powder Coatings', Juni 1983, S. 48-53" der Einsatz von Modaflow PIII der Firma Monsanto, USA, beschrieben, welches ein auf eine spezielle Kieselsäure aufgebrachtes Verlaufmittel darstellt.

Die einzelnen Komponenten des Pulverlacks wie Bindemittel, Verlaufmittel auf Kieselgel, Pigmente und sonstige Hilfsmittel werden üblicherweise in einem Extruder miteinander aufgeschmolzen und die erhaltene Masse dann zu dem gewünschten Pulver verarbeitet.

Die so erhältlichen Pulverlacke enthalten jedoch noch das Trennmittel Kieselgel, welches dann als anorganisches stockend wirkendes Material auch in den Überzügen verbleibt und diesen lediglich begrenzten Verlauf sowie ein meist unerwünschtes mattes und kreidiges Aussehen verleiht.

Der Erfindung lag daher die Aufgabe zugrunde, die geschilderten Nachteile im Falle der Pulverlacke zu beheben. Allgemein erstreckt sich die Aufgabe auf die Verbesserung all derjenigen anwendungstechnischen Verfahren, bei denen sich die Mitverwendung eines Verlaufmittels empfiehlt.

Demgemäß wurden die eingangs definierten pulverförmigen Zubereitungen gefunden.

Das polymere organische Kernmaterial der erfindungsgemäßen Mikrokapseln kann prinzipiell beliebiger Natur sein, sofern es seine Funktion als Verlaufmittel für ein filmbildendes Polymer erfüllt.

Die größte praktische Bedeutung haben Homopolymerisate von Acrylsäurealkylestern sowie Copolymerisate mit überwiegenden Anteilen an Acrylsäurealkylestern.

Dabei kommen vor allem Homo- oder Copolymerisate in Betracht, die zu 80 bis 100 Gew.-% aus solchen Acrylsäurealkylestern aufgebaut sind, die als Homopolymerisate eine Glasübergangstemperatur von kleiner 0°C haben, vor allem Acrylsäureester mit C₂- bis C₁₂-Monoalkoholen wie Acrylsäureethylester, Acrylsäureisopropylester, Acrylsäure-n-butyl- oder -iso-butylester, Acrylsäurepentylester, Acrylsäure-n-hexylester oder Acrylsäure-2-ethylhexylester. Weiterhin können die Polymerisate bis zu 20 Gew.-% ethylenisch ungesättigte Comonomere enthalten wie Methacrylsäureester, Vinylester oder vinylaromatische Monomere wie Styrol.

Weiterhin kommen als polymeres, niederviskoses Kernmaterial auch Poly-vinylalkylether in Betracht, beispielsweise Poly-vinylmethylether, Poly-vinylethylether oder Poly-vinylisobutylether.

Unter niederviskos im Sinne der Erfindung ist zu verstehen, daß die Homo- bzw. Copolymerisate, also die Verlaufmittel, im lösungsmittelfreien Zustand eine Viskosität von unter 200 Pa·s (nach DIN 53 019 bei 23°C) besitzen. Vorzugsweise weisen die polymeren Kernmaterialien eine Viskosität im Bereich von 2 bis 100 Pa·s, besonders bevorzugt 2 bis 50 Pa·s, auf. Die Glasübergangstemperatur, die vorteilhaft unter 0°C, besonders bevorzugt im Bereich von -10 bis -50°C, liegt.

Die Herstellung solcher Polymerisate ist bekannt und wird beispielsweise in Ullmann's Encyklopädie der Technischen Chemie, 4. Auflage, Bd. 19, S. 382-384, beschrieben.

Es liegt im Wesen von Mikrokapseln, daß Kernmaterial und Wandmaterial sich möglichst wenig ineinander lösen beziehungsweise nicht mischbar sind. Im Falle der als Verlaufmittel bevorzugten Homo- und Copolymerisate eignen sich als Wandmaterialien vornehmlich polymere vernetzte organische Stoffe mit vorzugsweise duroplastischen Eigenschaften.

Das Material für die Außenwand ist ansonsten keinen besonderen Beschränkungen unterworfen. So können als Wandmaterialien Aminoplastharze, Epoxyharze, Polyamidharze, Polyurethanharze, Polyharnstoffharze, Poly(meth)acrylatharze, Vinylharze oder deren Mischungen verwendet werden.

In Betracht kommen vor allem Wandungen aus Polyurethan und besonders bevorzugt aus Aminoplastharzen.

Die Herstellung derartiger Mikrokapseln ist an sich bekannt.

Im Falle von Aminoplastharzen als Wandmaterial können Harnstoff-Formaldehyd- oder Melamin-Harnstoff-Formaldehyd-Kondensate eingesetzt werden, jedoch sind vor allem Melamin-Formaldehyd-Kondensate bevorzugt, wobei als Ausgangsstoffe für das Wandmaterial vor allem Melamin-Formaldehyd-Vorkondensate mit einem Molverhältnis von Melamin zu Formaldehyd von 1:1,5 bis 1:6, vorzugsweise 1:3 bis 1:6, in Betracht kommen, welche vorteilhafterweise mit einem C₁-C₄-Monoalkohol verethert sind. Besonders bevorzugt werden partiell mit Methanol oder Butanol veretherte Melamin-Formaldehyd-Kondensate als Ausgangsstoff für das Wandmaterial eingesetzt. Die Herstellung von derartigen Mikrokapseln ist in der EP-A 26 914 beschrieben.

Das Verlaufmittel wird bei Temperaturen im Bereich von 30 bis 100°C, insbesondere 60 bis 85°C, mit Hilfe eines Hochleistungsdispergieraggregats in einer wäßrigen Phase dispergiert. Die wäßrige Phase enthält vorzugsweise ein sulfonatgruppenhaltiges Polymer als Schutzkolloid, welches eine Aggregation der Mikrokapseln verhindert und somit die Dispersion stabilisiert. Solche sulfonatgruppenhaltigen Polymeren sind beispielsweise in der deutschen Patentanmeldung P 42 09 632.4 beschrieben.

Unter stetiger Dispergierung mit dem Hochleistungsdispergieraggregat wird die Dispersion aus dem Verlaufmittel in der wäßrigen Phase mit Hilfe einer sauer wirkenden Verbindung auf einen pH-Wert von 3 bis 6,5, vorzugsweise auf einen pH-Wert von 3,5 bis 5, gestellt und über einen Zeitraum von in der Regel 0,5 bis 3 h eine wäßrige Lösung eines Melamin-Formaldehyd-Vorkondensats, das teilweise verethert sein kann, zugegeben. Die Zugabedauer beträgt in der Regel zwischen 0,5 und 3 h. Der pH-Wert wird während dieser Zeit durch fortlaufende Zugabe einer sauer wirkenden Verbindung konstant gehalten. Als sauer wirkende Verbindungen können organische Säuren wie z.B. Ameisensäure oder Essigsäure, aber auch anorganische Säuren wie z.B. Phosphorsäure, eingesetzt werden. Nach dem Ende der Melamin-Formaldehyd-Vorkondensat-Zugabe wird die Mikrokapseldispersion in der Regel noch 1 bis 3 h bei 70 bis 100°C nachgehärtet. Durch Neutralisation mit einer basisch wirkenden Verbindung wird die Reaktion unterbrochen. Als basisch wirkende Verbindungen können organische Basen wie z.B. Di- oder Triethanolamin, aber auch anorganische Basen wie z.B Ammoniak oder Natronlauge, eingesetzt werden.

Die so erhaltenen Mikrokapseldispersionen weisen Mikrokapseln mit Durchmessern im Bereich von 1 bis 200 µm, bevorzugt 1 bis 100 µm, auf.

Die Mikrokapseldispersionen können mit Dispersionen filmbildender Polymere vermischt werden, um nach üblicher Technik zur Herstellung von Überzügen eingesetzt zu werden.

Besondere Bedeutung haben die Mikrokapseln jedoch beim Einsatz in fester Form. Die Trocknung kann prinzipiell nach allen üblichen Techniken erfolgen, wobei jedoch die Sprühtrocknung die größte Bedeutung hat.

Wenn die Mikrokapseldispersion durch Sprühtrocknung in die feste Form überführt wird, empfiehlt es sich, daß nach dem Aushärten zu der Dispersion eine Schlämme aus Melamin und Wasser solange zugegeben wird, bis der getrocknete Aufstrich der Mikrokapseldispersion auf einer Glasplatte nicht mehr haftet.

Die Herstellung der Mikrokapseln erfolgt so, daß der Anteil an wirksamer Substanz, d.h. an dem Verlaufshilfsmittel im Kern der Mikrokapsel, 70 bis 90 Gew.-%, bezogen auf das Gesamtgewicht der Mikrokapsel, beträgt.

Die Mikrokapseln, welche als Kernmaterial ein niedrigviskoses Homo- oder Copolymer mit einer Glasübergangstemperatur von unter 0°C enthalten, eignen sich hervorragend zum Einsatz in Pulverlacken. Durch den Einsatz eines mikroverkapselten Verlaufmittels kann der Anteil an inerter Phase im Pulverlack gesenkt werden.

Abgesehen von dem mikroverkapselten Verlaufshilfsmittel können die pulverförmigen Zubereitungen für die Herstellung von Überzügen durch Pulverlackbeschichtung in an sich bekannten Zusammensetzungen hergestellt werden (siehe z.B.: M.K. Youssouf, "Modern Paint and Coatings", Juni 1989, S. 48-53). Als filmbildende Oligomere und Polymere können dabei die für diese Technik üblichen Acrylat-, Methacrylat-, Polyester-, Polyurethan- oder Epoxyharz-Bindemittel eingesetzt werden. Weiterhin enthalten die Pulverlacke üblicherweise Pigmente sowie Hilfsmittel wie beispielsweise Benzoin oder für diese Technik übliche Vernetzer.

Die Mikrokapseln, die die herkömmlichen auf Silicagel aufgezogenen Verlaufshilfsmittel ersetzen, werden der pulverförmigen Zubereitung in solchen Mengen zugegeben, daß der Anteil an Mikrokapseln 0,1 bis 10 Gew.-%, vorzugsweise von 0,1 bis 3 Gew.-%, bezogen auf das Gesamtgewicht des Pulverlacks, beträgt.

Durch den Einsatz des mikroverkapselten Verlaufmittels, bei dem der Anteil an wirksamer Substanz 70 bis 90 Gew.-%, bezogen auf das Gesamtgewicht, beträgt, kann der Anteil an inerter Phase gegenüber den herkömmlichen Verlaufshilfsmitteln auf Silicagelträger, die nur 55 bis 65 Gew.-% wirksame Substanz aufweisen, gesenkt werden.

Bei den in den folgenden Beispielen 1 und 2 eingesetzten Melamin-Formaldehyd-Vorkondensaten handelt es sich um ein Produkt, welches im Mittel 5,8 Methylolgruppen pro Molekül Melamin trägt, wobei im Mittel 2,3 Methylolgruppen mit Methanol verethert sind. Die Herstellung ist dem Fachmann bekannt. Das teilveretherte Melamin-Formaldehyd-Vorkondensat wird in Form einer wäßrigen Lösung mit einem Feststoffgehalt von 70 Gew.-% eingesetzt.

### Herstellung des sulfonatgruppenhaltigen Polymers

In einem Rührgefäß wurden 1050 g Wasser auf 75°C erhitzt und mit 0,15 g Kaliumpersulfat versetzt. Innerhalb einer Stunde wurden gleichzeitig eine Mischung aus 80 g Acrylsäure, 80 g Methacrylat sowie 4 g Styrol, eine Lösung von 236 g 2-Acrylamido-2-propansulfonsäure in 400 g Wasser, die mit 305 g 20 gew.-%iger wäßriger NaOH neutralisiert wurde, und eine Lösung von 1,35 g Kaliumsulfat in 150 g Wasser zugegeben. Dann wurde 3 h lang bei 75°C nachpolymerisiert. Man erhielt eine farblose, leicht trübe viskose Lösung mit einem Feststoffgehalt von 19 Gew.-%.

### Herstellung der Mikrokapseln

### Beispiel 1

In einem Rührgefäß wurden 550 g einer Mischung aus Wasser und 140 g der wäßrigen Lösung des sulfonatgruppenhaltigen Polymers mit 520 g Polybutylacrylat (Acronal® LR 8820, Viskosität nach DIN 53 019 (23°C) ca. 25 Pa·s) vermischt. Diese Mischung wurde auf 80°C erhitzt und mit Hilfe eines Hochleistungsdispergieraggregats dispergiert. Innerhalb einer Stunde wurden 229 g des teilveretherten Melamin-Formaldehyd-Kondensats zugegeben, wobei der pH-Wert der Dispersion unter ständiger Zugabe von 10 gew.-%iger wäßriger Ameisensäure auf 4,5 gehalten wurde. Dann wurde die Dispersion noch zwei Stunden mit Hilfe eines Propellerrührers gerührt.

Danach wurde eine Melaminschlämme aus 46 g Melamin und 125 g Wasser zugegeben und die Mischung anschließend mit 40 g wäßrigem Triethanolamin (50 gew.-%ig) neutralisiert. Die Mikrokapseldispersion enthält bei einem Feststoffgehalt von 40,3 Gew.-% Mikrokapseln mit Durchmessern von 1 bis 40 µm. Die Dispersion wurde durch Sprühtrockpung in ein Pulver überführt. Das so erhaltene Pulver läßt sich agglomeratfrei redispergieren. Der Anteil an wirksamer Substanz beträgt 75 Gew.-%, bezogen auf das Gesamtgewicht.

### Beispiel 2

Es wurde analog Beispiel 1 verfahren, jedoch wurden statt des Polybutylacrylats 520 g eines Polyvinylethylethers (Lutonal® A25, Viskosität nach DIN 53 019 (23°C) ca. 5 Pa·s) eingesetzt und das Melamin-Formaldehyd-Vorkondensat bei 70°C zudosiert.

Man erhielt eine Mikrokapseldispersion mit einem Teilchendurchmesser von 1 bis 30 µm, die durch Sprühtrocknung in ein Pulver überführt wurde. Der Anteil an wirksamer Substanz beträgt 75 Gew.-%, bezogen auf das Gesamtgewicht.

Mit den mikroverkapselten Verlaufmitteln gemäß den Beispielen 1 und 2 wurden übliche Pulverlacke hergestellt.

### Beispiel 3: Pulverlack, weiß, auf der Basis von Polyesterharz

- 610,83 g: carboxyliertes, gesättigtes Polyesterharz (Uralac P 2347 der Firma DSM Resins, NL)
- 45,97 g: Vernetzer (Araldit PT 810 der Firma Ciba-Geigy AG, CH)
- 328,38 g: Titandioxid (Rutil)
- 9,85 g: Verlaufmittel
- 4,97 g: Benzoin

### Beispiel 4: Pulverlack, weiß, auf Basis von Polyester-/Epoxidharz-Mischung

- 328,40 g: carboryliertes, gesättigtes Polyesterharz (Uralac 2347 der Firma DSM Resins, NL)
- 328,40 g: Epoxidharz (Epikote 1055/1004 der Firma Shell Chemie BV, NL)
- 328,40 g: Titandioxid (Rutil)
- 9,85 g: Verlaufmittel
- 4,95 g: Benzoin

Die so hergestellten Pulverlacke waren nichtklebrig und aggregatfrei.

Zum Vergleich wurden Pulverlacke hergestellt, die statt des erfindungsgemäß mikroverkapselten Verlaufmittels 9,85 g eines Polyacrylatverlaufmittels, welches auf eine spezielle Kieselsäure aufgebracht war (Byk® - 360P, der Fa. Byk Chemie GmbH, DE, Wirksubstanz 57 %), enthalten.

Die Pulverlacke mit den erfindungsgemäßen mikroverkapselten Verlaufmitteln weisen einen höheren Anteil an wirksamer Substanz am Verlaufsmittel auf.

## Patentansprüche

1. Für die Herstellung von Überzügen geeignete pulverförmige Zubereitungen, enthaltend ein pulverförmiges filmbildendes Polymer und Mikrokapseln aus einem polymeren Wandmaterial und einem polymeren Kernmaterial, welches als Verlaufmittel für die Filmbildung von filmbildenden Oligomeren und Polymeren geeignet ist.

## Claims

1. A powder formulation suitable for the production of coatings, containing a film-forming polymer in powder form and microcapsules comprising a polymeric wall material and a polymeric core material which is suitable as a leveling agent for film formation by film-forming oligomers and polymers.

## Revendications

1. Préparations pulvérulentes convenant pour la fabrication de revêtements, contenant un polymère pulvérulent pouvant former un film et des microcapsules constituées d'un matériau de paroi polymère et d'un matériau de coeur polymère qui convient en tant qu'agent de développement pour la formation d'un film à base d'oligomères et de polymères pouvant former un film.
